# EUROPEAN PATENT SPECIFICATION

(11) **EP 4 526 161 B1**
(45) Date of publication and mention of the grant of the patent: **06.05.2026**
(21) Application number: 23729847.6
(22) Date of filing: 15.05.2023
(51) Int. Cl.: B60R 16/02, B60L 53/10, B60L 53/16, B60L 53/18, B65H 75/36

(54) **RECHARGING UNIT FOR AN ELECTRICALLY POWERED MOTOR VEHICLE**
AUFLADEEINHEIT FÜR EIN ELEKTRISCH ANGETRIEBENES KRAFTFAHRZEUG
UNITÉ DE RECHARGE POUR UN VÉHICULE À MOTEUR ÉLECTRIQUE

(30) Priority: 19.05.2022 IT 202200010367
(43) Date of publication of application: 26.03.2025
(73) Proprietor: Stellantis Europe S.p.A., 10135 Torino (TO) (IT)
(72) Inventor: BIANCO, Leonardo, 10135 Torino (IT); BRUNO, Salvatore, 10135 Torino (IT); CARBONE, Gaetano, 10135 Torino (IT); DELMONTE, Maurizio, 10135 Torino (IT); ESPOSITO, Giovanni, 10135 Torino (IT); MASTRANTUONO, Guiscardo, 10135 Torino (IT); ROMANIELLO, Fabiana, 10135 Torino (IT)
(74) Representative: Buzzi, Notaro & Antonielli d'Oulx S.p.A.
(86) International application number: PCT/IB2023/054970
(87) International publication number: WO 2023/223175

(56) References cited:
- EP-A1- 2 506 378
- EP-A1- 2 690 735
- DE-A1- 102020 131 712
- JP-A- 2009 136 108
- US-A- 5 855 262
- US-A1- 2011 139 521

## Description

### Field of the invention

The present invention relates to a recharging unit for recharging one or more batteries of an electrically powered motor vehicle, permanently provided on board the motor vehicle.

### Prior art

Document US 2011/139521 discloses a recharging unit for recharging one or more batteries of an electrically powered motor vehicle, permanently provided on board said motor-vehicle, wherein said recharging unit comprises an electrical connector carried by a charging cable, provided for connection to an external electrical socket, a hollow supporting and containment body configured for receiving said charging cable and said electrical connector, wherein said hollow supporting and containment body defines a cavity, a first portion, and a second portion, wherein said first portion has an opening from which it is possible to take said electrical connector out manually and a receiving seat provided for receiving and fixing the electrical connector in a resting position when the connector does not have to be used to carry out a recharging operation, wherein said receiving seat is set in the proximity of the opening and is substantially shaped so as to reproduce in negative the shape of the electrical connector. As is known in the sector in question, recharging of a battery pack of an electrically powered vehicle is obtained by means of electrical connectors configured for guaranteeing safe and effective charging.

According to the recharging equipment, the connectors may be of a traditional type, for example sockets for domestic use, or else connectors for industrial use. Usually, the first solution is used in areas where access is reserved to the owner of the motor vehicle, whereas the second solution is preferable in the public sphere.

One of the most widespread solutions regards provision of recharging columns that include inside them an electrical-connection cable and a connector provided with electrical terminals for connecting up to a corresponding connector element on board the motor vehicle.

The present invention stems from the desire to provide a solution for carrying out an operation of recharging an electric or hybrid vehicle that will be relatively simple to implement, of low cost, and compatible with the overall dimensions and installation spaces available on board the motor vehicle.

### Object of the invention

The object of the present invention is to provide a recharging unit of the type indicated at the start of the present description that will have a relatively simple and low-cost structure, at the same time enabling the recharging operations to be carried out in an intuitive and effective way.

A further object of the invention is to provide a modular recharging unit that can be adapted for different types of recharging connectors.

A further object of the invention is to provide a unit of the type referred to above that will be compatible with the overall dimensions and installation spaces available on board the motor vehicle, for example in the area of the engine compartment.

### Summary of the invention

With a view to achieving one or more of the aforesaid objects, the subject of the invention is a unit for recharging one or more batteries of an electrically powered motor vehicle, permanently provided on board said motor vehicle, wherein said recharging unit comprises:
- an electrical connector carried by a charging cable, provided for connection to an external electrical socket;
- a hollow supporting and containment body configured for receiving said charging cable and said electrical connector,
   wherein hollow supporting and containment body defines a cavity, a proximal portion, and a distal portion, wherein said proximal portion has an opening from which it is possible to take said electrical connector out manually; and
- a receiving seat provided for receiving and fixing the electrical connector in a resting position, when the connector does not have to be used to carry out a recharging operation, wherein said receiving seat is set in the proximity of the opening and is substantially shaped so as to reproduce in negative the shape of the electrical connector.

Further characteristics of the invention are specified in the annexed dependent claims.

### Brief description of the drawings

Further characteristics and advantages of the invention will emerge from the ensuing description with reference to the annexed drawings, which are provided purely by way of non-limiting example and in which:
- Figures 1A and 1B are, respectively, a general perspective view of a motor vehicle and a perspective view at an enlarged scale of an area of the motor vehicle where a recharging unit according to a preferred embodiment is mounted;
- Figures 2 and 3 are, respectively, a perspective view and a cross-sectional view of the recharging unit according to a preferred embodiment;

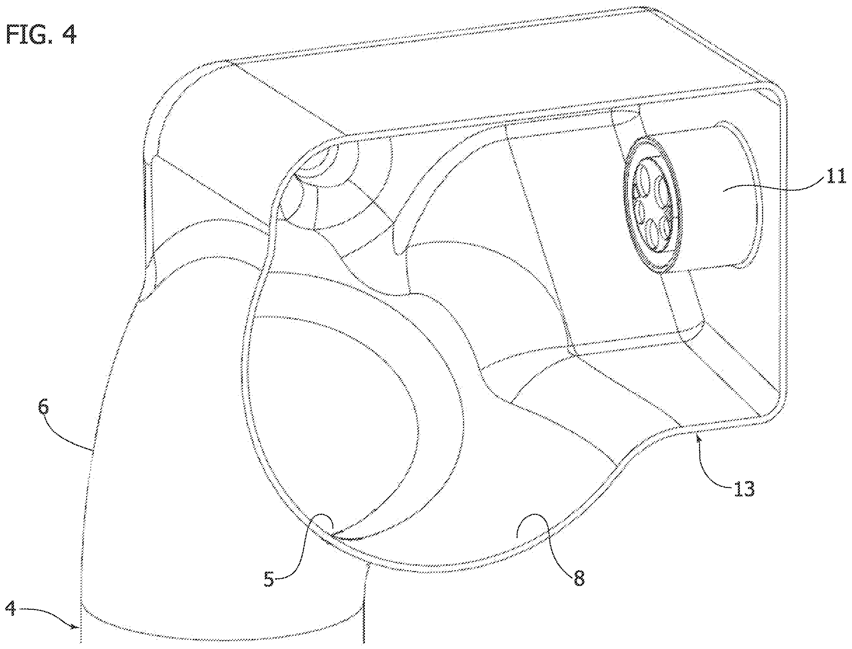

- Figures 4 and 5 are perspective views at an enlarged scale, which represent various components illustrated in Figures 2 and 3;
- Figure 6 is a further perspective view of the recharging unit according to a preferred embodiment;
- Figure 7 is a view at an enlarged scale of some components illustrated in the Figure 6; and
- Figure 8 is an exploded perspective view that illustrates further characteristics of the invention.

### Detailed description of a number of embodiments

In the ensuing description, various specific details are illustrated aimed at enabling an in-depth understanding of examples of one or more embodiments. The embodiments may be obtained without one or more of the specific details, or with other methods, components, materials, etc. In other cases, known structures, materials, or operations are not shown or described in detail so that various aspects of the embodiments will not be obscured. Reference to "an embodiment" or "one embodiment" in the framework of the present description is intended to indicate that a particular configuration, structure, or characteristic described in relation to the embodiment is comprised in at least one embodiment. Hence, phrases such as "in an embodiment" or "in one embodiment" that may be present in various points in this description do not necessarily refer to one and the same embodiment. Moreover, particular conformations, structures, or characteristics may be combined in any adequate way in one or more embodiments and/or associated to the embodiments in a way different from what has been illustrated herein, so that, for example, a characteristic exemplified herein in relation to one figure may be applied to one or more embodiments exemplified in a different figure.

The references used herein are provided merely for convenience and hence do not delimit the sphere of protection or the scope of the embodiments.

In the annexed drawings, number 1 designates as a whole a unit for recharging one or more batteries of an electric or hybrid motor vehicle V, which is permanently provided on board the motor vehicle V.

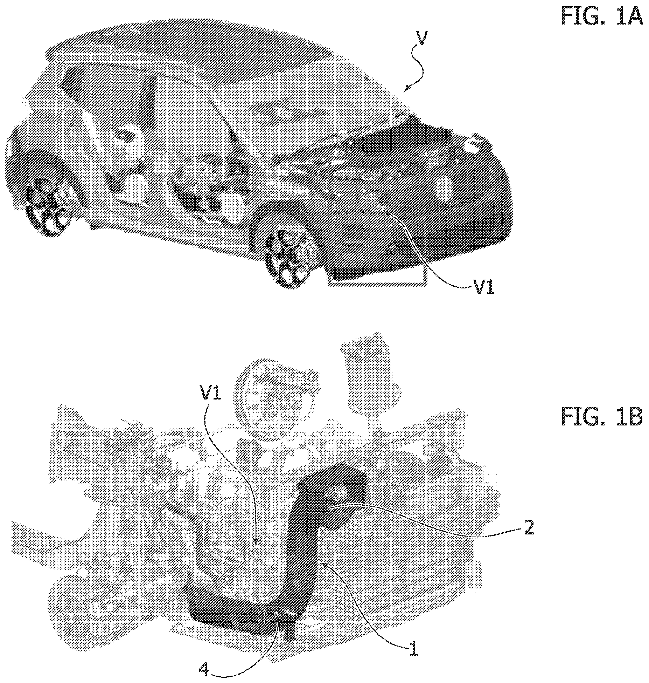

Figures 1A and 1B are, respectively, a general perspective view of a motor vehicle V and a perspective view at an enlarged scale of an area of the motor vehicle V where the recharging unit 1 is mounted. According to a preferred embodiment, the recharging unit 1 is mounted on board the motor vehicle V in a front portion V1 substantially corresponding to a lateral portion of the engine compartment. However, it should be noted that the unit 1 may be installed in other positions, for example in a rear area of the vehicle, in the luggage compartment, in the proximity of a rear lighting element such as a foglamp, in a lateral area of the vehicle, etc.

The recharging unit 1 may be used for recharging different types of battery cells and/or modules, which constitute battery packs for supplying a purely electric or a hybrid propulsion system.

According to the present invention, the recharging unit 1 comprises a hollow supporting and containment body 4 configured for housing a charging cable 3 provided on which is an electrical connector 2 for connection to an electrical socket external to the motor vehicle V. It should be noted that the electrical connector 2 may be of a type different from what is schematically illustrated, according to the respective coupling with an external recharging socket.

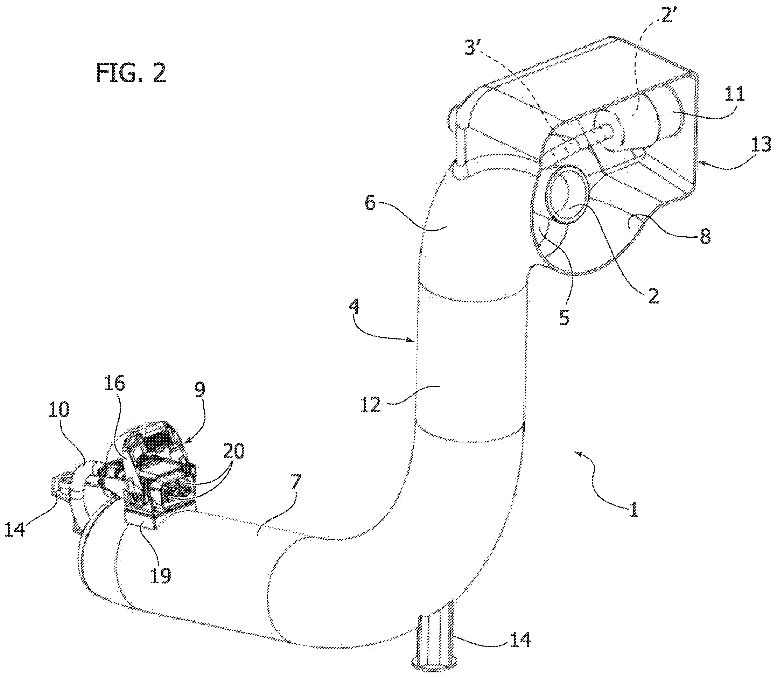

According to the embodiment illustrated, in particular in Figure 2, the hollow supporting and containment body 4 is substantially tubular, defining a cavity 5 set within which are the charging cable 3, a distal portion 7, and a proximal portion 6, which has an opening 8 from which it is possible to take out manually the electrical connector 2 to connect up to the external electrical socket (not shown).

According to the embodiment illustrated, the hollow supporting and containment body 4 has a curved pattern, in which provided between the proximal portion 6 and the distal portion 7 is a substantially vertical intermediate portion 12 (with reference to the configuration installed on board the motor vehicle) so as to provide a substantially S-shaped body 4. The distal portion 7 defines a substantially horizontal stretch, and the proximal portion 6 comprises a head portion 13, provided in which is the aforesaid opening 8 from which it is possible to take out the electrical connector 2.

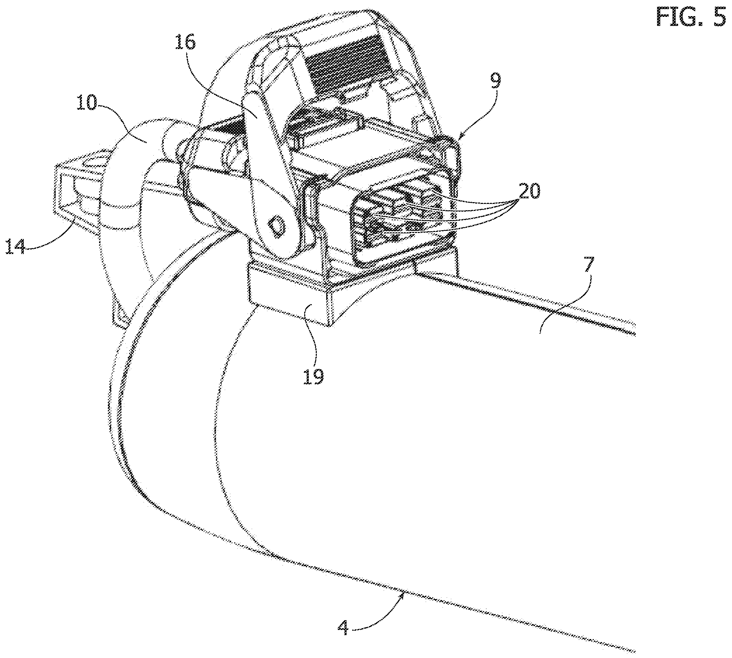

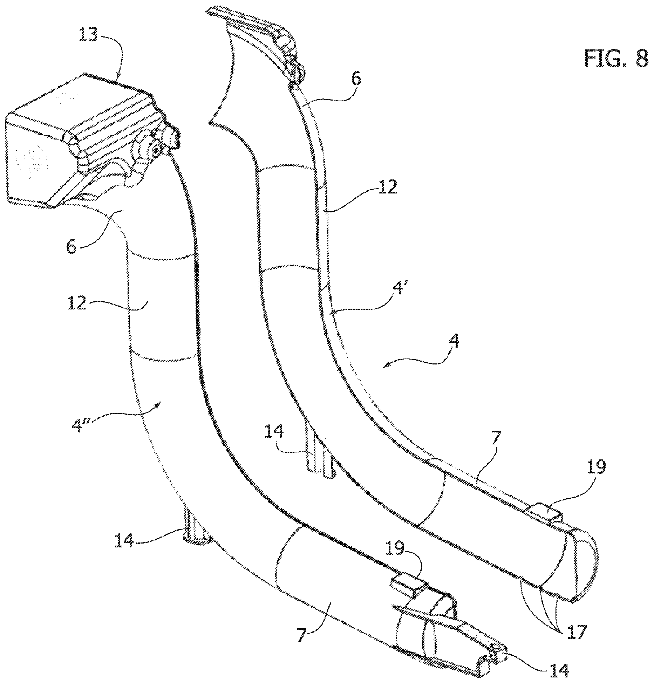

In one or more embodiments, as illustrated in Figure 8, the hollow supporting and containment body 4 is formed by two half-shells 4', 4", for example made of plastic material, which can be coupled together with mutual-fixing means so as to form the tubular body and the cavity 5 within which the charging cable 3 is housed. Preferably, the hollow supporting and containment body 4 has a cross section of a circular shape. With reference to Figure 5, it should be noted that the hollow supporting and containment body 4 comprises mounting portions 14 configured for fixing in position the hollow supporting and containment body 4 to the chassis of the motor vehicle. For instance, the mounting portions comprise connection elements in the proximity of the intermediate portion 12 and of the distal portion 7, which are provided for connection to a bottom portion of the chassis of the motor vehicle V, by means of mutual-fixing elements.

The recharging unit 1 moreover comprises a further electrical connector 9 connected to the charging cable 3 at an end 10 opposite to the electrical connector 2 and facing the opening 8 for it to be taken out manually. The aforesaid further electrical connector 9 is configured for receiving a corresponding connector element (not illustrated) for connection to respective electronic components for managing the batteries mounted on the motor vehicle V. As illustrated in the view at an enlarged scale of Figure 5, the aforesaid further electrical connector 9 is supported externally by said hollow supporting and containment body 4 on the distal portion 7. More in particular, a fixing seat 19 is applied on the outer wall of the body 4 for receiving the aforesaid further electrical connector 9. According to the example illustrated, the further electrical connector 9 has a plurality of electrical terminals 20 provided for connection with respective terminals of the corresponding connector element. The further connector 9 moreover comprises a mechanical arm 16 configured for being moved with a rotation of approximately 90° to obtain mechanical coupling with the corresponding connector element (not illustrated). It should be noted that the electrical cable 3 projects from the containment body 4 in a position corresponding to a terminal wall of the body 4, with a substantially circular path to reach the further electrical connector 9 mounted on top of and outside the body 4.

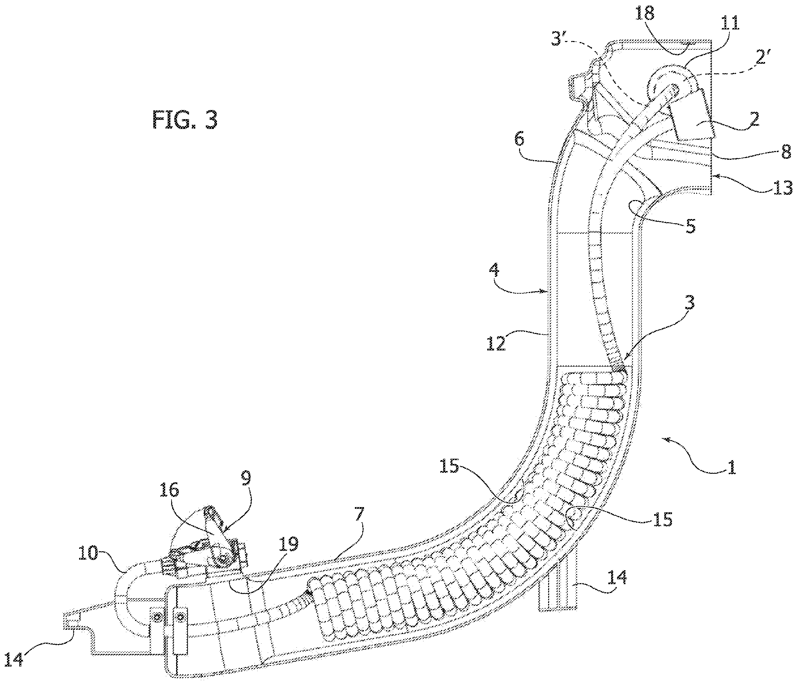

According to a further characteristic illustrated in Figure 3, the hollow supporting and containment body 4 has an inner coating layer or lining 15 applied over the inner surface of the body 4 so as to obtain a layer set between the charging cable 3 and the material of which the body 4 is made. Thanks to this characteristic, it is possible to reduce drastically any noise when the motor vehicle is travelling (due to the contact of the inner wall of the body 4 with the cable 3), as well as to reduce friction (once again resulting from the contact of the inner wall of the body 4 with the cable 3) during movement of the charging cable 3 to take the connector 2 out manually. According to an example of embodiment, the inner coating layer 15 is made of a material for acoustic insulation, for example of an elastomer type.

As illustrated in Figure 2, the charging cable 3 is a coiled cable, which, in a resting position, has a coiled pattern between the proximal portion 6 and the distal portion 7, i.e., between the two connectors 2, 9, where the coiled cable has a coiled pattern substantially coaxial with respect to the hollow supporting and containment body 4. In one or more embodiments, the overall length of the charging cable 3 is comprised between 3 and 7 m. Thanks to the coiled shape of the cable 3 and to the containment body 4, it is possible to provide on board the motor vehicle electrical cables of significant length in a compact and safe way. As illustrated in Figure 3, the charging cable 3 has, at the ends of the coiled portion, a respective substantially rectilinear portion connected to the respective connector 2, 9.

According to a characteristic of the invention, within the head portion 13 a receiving seat 11 is provided, configured for receiving and fixing the electrical connector 2 in a resting position, when the connector 2 does not have to be used for carrying out a recharging operation. This receiving seat 11 is configured in such a way that the connector 2 is housed on the seat 11, preventing any creation of noise in the passenger compartment due, for example, to movements of the charging cable 3 and of the connector 2 when the motor vehicle is travelling. Designated by the references 2', 3' are, respectively, the cable and the connector in the resting position on the receiving seat 11. It should be noted that the receiving seat 11 is substantially shaped to reproduce in negative the shape of the electrical connector 2. In the embodiment illustrated in the drawings, the receiving seat 11 is provided inside the head portion 13, projecting from a side wall substantially perpendicular to the opening 8.

In operation, a user who has to carry out a recharging operation opens of a mobile hatch (not illustrated), applied to the opening 8, so as to be able to access the charging cable 3 and the connector 2 present within the containment and supporting body 4. The operator takes the connector 2 manually off the seat 11 to make the connection to an external recharging socket, exploiting the coiled shape and the overall length of the charging cable 3.

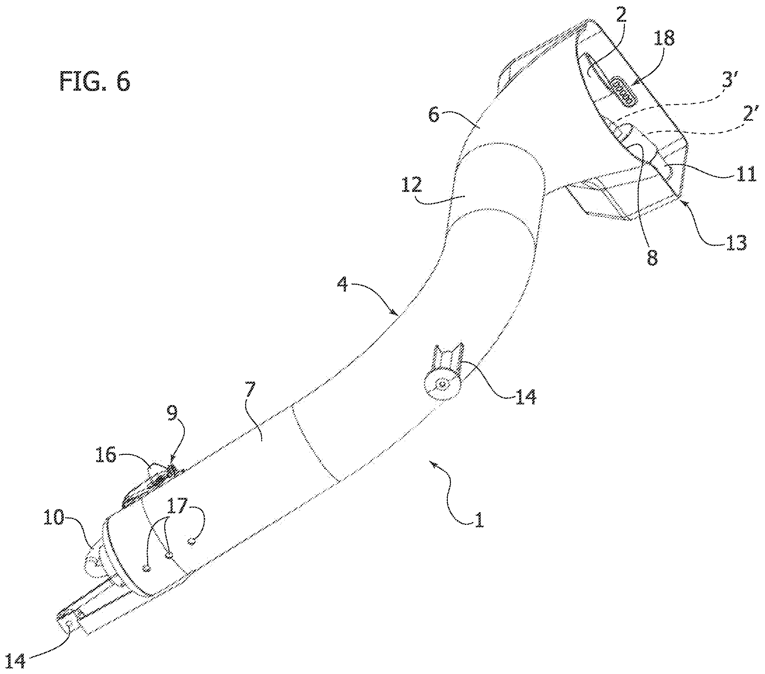

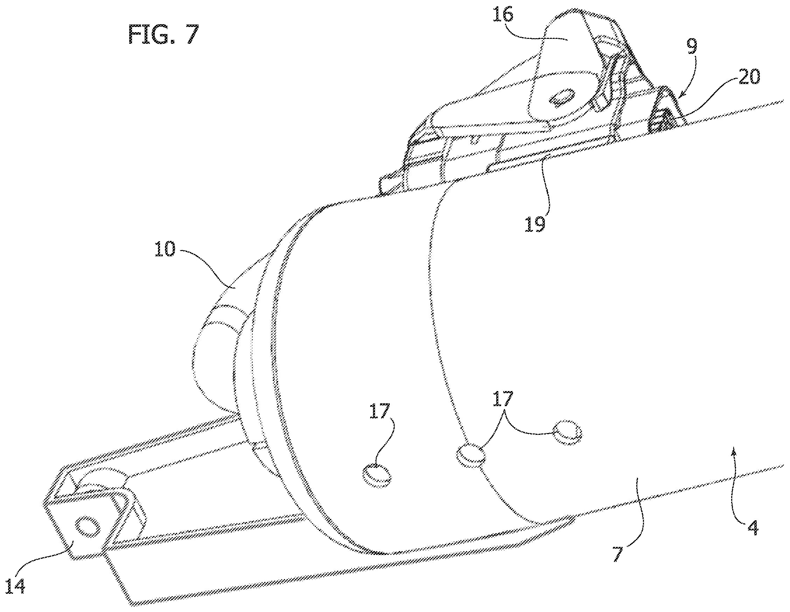

According to a further characteristic illustrated in Figures 6 and 7, the hollow supporting and containment body 4 has at least one drainage opening 17 provided for preventing collection of stagnant water inside the body 4, which could otherwise damage the charging cable 3 and/or the connector 2. This characteristic is to be considered particularly advantageous given that, during use, the cable 3 and the connector 2 can accumulate humidity from the external environment in which the recharging socket to which the connector 2 is to be connected is located. According to the embodiment illustrated, in a bottom area (with reference to the installed configuration) of the distal portion 7, a plurality of drainage openings 17 are present spaced apart along a horizontal stretch of the body 4. These drainage openings 17 may also be made of a material suited to enabling passage of water/humidity only at outlet from the body 4 and not at inlet thereto.

According to a further characteristic illustrated in Figure 6, at the head portion 13 a plurality of lighting sources 18 are present, for example LEDs, to light up the area where the electrical connector 2 is to be taken out and/or to represent the current state of charge of the batteries of the motor vehicle (for example, with a succession of LEDs that can emit a light source of different colours - green, yellow, red). According to a preferred example illustrated, the lighting sources 18 are applied within the head portion 13 to a top wall so as to emit a light source in the direction of the electrical connector 2. Of course, the configuration of the lighting source illustrated in the drawings is provided herein purely by way of example.

Of course, without prejudice to the principle of the invention, the details of construction and the embodiments may vary widely with respect to what has been described and illustrated herein purely by way of example, without thereby departing from the scope of the present invention.

## Claims

1. A recharging unit (1) for recharging one or more batteries of an electrically powered motor vehicle (V), permanently provided on board said motor vehicle (V), wherein said recharging unit (1) comprises:
- an electrical connector (2) carried by a charging cable (3), provided for connection to an external electrical socket;
- a hollow supporting and containment body (4) configured for receiving said charging cable (3) and said electrical connector (2),
wherein said hollow supporting and containment body (4) defines a cavity (5), a proximal portion (6), and a distal portion (7), wherein said proximal portion (6) has an opening (8) from which it is possible to take said electrical connector (2) out manually; and
- a receiving seat (11) provided for receiving and fixing the electrical connector (2) in a resting position when the connector (2) does not have to be used to carry out a recharging operation, wherein said receiving seat (11) is set in the proximity of the opening (8) and is substantially shaped so as to reproduce in negative the shape of the electrical connector (2),
wherein said receiving seat (11) is set inside a head portion (13) of the body (4), projecting from a lateral wall of the head portion (13) substantially perpendicular to the opening (8).

2. The recharging unit (1) according to any one of the preceding claims, wherein the supporting and containment body (4) defines a substantially S-shaped tubular body.

3. The recharging unit (1) according to any one of the preceding claims, wherein the supporting and containment body (4) is made up of two half-shells (4', 4") that can be coupled together by mutual-fixing means.

4. The recharging unit (1) according to any one of the preceding claims, wherein said supporting and containment body (4) comprises an inner coating layer (15) applied over the inner surface of the body (4) so as to obtain a layer of acoustic insulation and friction reduction, set between the charging cable (3) and the material of which the body (4) is made.

5. The recharging unit (1) according to any one of the preceding claims, wherein the charging cable (3) is a coiled cable that, in a resting position, assumes a coiled pattern substantially coaxial with the hollow supporting and containment body (4).

6. The recharging unit (1) according to any one of the preceding claims, comprising a further electrical connector (9) supported by said hollow supporting and containment body (4) on said distal portion (7), wherein said further electrical connector (9) is connected to said charging cable (3) at an end (10) opposite to said electrical connector (2) and is configured for receiving a corresponding connector element for connection to respective electronic components for managing the batteries of the motor vehicle (V).

7. The recharging unit (1) according to any one of the preceding claims, wherein the supporting and containment body (4) has at least one drainage opening (17) provided for preventing any collection of stagnant water inside the body (4), wherein said at least one drainage opening (17) is provided in a bottom area of the distal portion (7).

8. The recharging unit (1) according to any one of the preceding claims, comprising a plurality of lighting sources (18), for example LEDs, for lighting up the area from which the electrical connector (2) can be taken out and/or for representing the current state of charge of the batteries of the motor vehicle.

9. An electrically powered motor vehicle comprising a recharging unit (1) for recharging one or more batteries, which is permanently provided on board said motor vehicle (V), wherein said recharging unit (1) comprises:
- an electrical connector (2) carried by a charging cable (3), provided for connection to an external electrical socket,
- a hollow supporting and containment body (4) configured for housing said charging cable (3) and said electrical connector (2),
wherein said hollow supporting and containment body (4) defines a cavity (5), a proximal portion (6), and a distal portion (7), wherein said proximal portion (6) has an opening (8) from which it is possible to take said electrical connector (2) out manually; and
- a receiving seat (11) provided for receiving and fixing the electrical connector (2) in a resting position, when the connector (2) does not have to be used to carry out a recharging operation, wherein said receiving seat (11) is set in the proximity of the opening (8) and is substantially shaped so as to reproduce in negative the shape of the electrical connector (2),
**characterized in that** said receiving seat (11) is set inside a head portion (13) of the body (4), projecting from a lateral wall of the head portion (13) substantially perpendicular to the opening (8).

## Patentansprüche

1. Eine Ladeeinheit (1) zum Laden einer oder mehrerer Batterien eines elektrisch angetriebenen Kraftfahrzeugs (V), dauerhaft an Bord des genannten Kraftfahrzeugs (V) vorgesehen, wobei die genannte Ladeeinheit (1) umfasst:
- einen elektrischen Stecker (2), der von einem Ladekabel (3) getragen wird, vorgesehen zum Anschluss an eine externe elektrische Steckdose;
- einen hohlen Trag- und Aufnahmekörper (4), konfiguriert zur Aufnahme des genannten Ladekabels (3) und des genannten elektrischen Steckers (2),
wobei der genannte hohle Trag- und Aufnahmekörper (4) einen Hohlraum (5), einen proximalen Abschnitt (6) und einen distalen Abschnitt (7) definiert, wobei der genannte proximale Abschnitt (6) eine Öffnung (8) aufweist, aus der der genannte elektrische Stecker (2) manuell entnommen werden kann; und
- einen Aufnahmesitz (11), vorgesehen zur Aufnahme und Fixierung des elektrischen Steckers (2) in einer Ruheposition, wenn der Stecker (2) nicht verwendet werden muss, um einen Ladevorgang durchzuführen, wobei der genannte Aufnahmesitz (11) in der Nähe der Öffnung (8) angeordnet und im Wesentlichen so geformt ist, dass er die Form des elektrischen Steckers (2) negativ nachbildet,
wobei der genannte Aufnahmesitz (11) innerhalb eines Kopfabschnitts (13) des Körpers (4) angeordnet ist, der von einer Seitenwand des Kopfabschnitts (13) im Wesentlichen senkrecht zur Öffnung (8) vorsteht.

2. Ladeeinheit (1) nach einem der vorhergehenden Ansprüche, wobei der Trag- und Aufnahmekörper (4) einen im Wesentlichen S-förmigen Rohrkörper definiert.

3. Ladeeinheit (1) nach einem der vorhergehenden Ansprüche, wobei der Trag- und Aufnahmekörper (4) aus zwei Halbschalen (4', 4") besteht, die durch gegenseitige Befestigungsmittel miteinander gekoppelt werden können.

4. Ladeeinheit (1) nach einem der vorhergehenden Ansprüche, wobei der genannte Trag- und Aufnahmekörper (4) eine innere Beschichtungsschicht (15) umfasst, die auf der Innenfläche des Körpers (4) aufgebracht ist, um eine Schicht aus Schalldämmung und Reibungsreduzierung zu erhalten, die zwischen dem Ladekabel (3) und dem Material, aus dem der Körper (4) besteht, angeordnet ist.

5. Ladeeinheit (1) nach einem der vorhergehenden Ansprüche, wobei das Ladekabel (3) ein spiralförmiges Kabel ist, das in einer Ruheposition ein spiralförmiges Muster annimmt, das im Wesentlichen koaxial zum hohlen Trag- und Aufnahmekörper (4) verläuft.

6. Ladeeinheit (1) nach einem der vorhergehenden Ansprüche, umfassend einen weiteren elektrischen Stecker (9), der von dem genannten hohlen Trag- und Aufnahmekörper (4) an dem genannten distalen Abschnitt (7) getragen wird, wobei der genannte weitere elektrische Stecker (9) mit dem genannten Ladekabel (3) an einem Ende (10) gegenüber dem genannten elektrischen Stecker (2) verbunden ist und konfiguriert ist, um ein entsprechendes Verbindungselement zum Anschluss an jeweilige elektronische Komponenten zur Verwaltung der Batterien des Kraftfahrzeugs (V) aufzunehmen.

7. Ladeeinheit (1) nach einem der vorhergehenden Ansprüche, wobei der Trag- und Aufnahmekörper (4) mindestens eine Entwässerungsöffnung (17) aufweist, die vorgesehen ist, um eine Ansammlung von stehendem Wasser im Inneren des Körpers (4) zu verhindern, wobei die genannte mindestens eine Entwässerungsöffnung (17) in einem Bodenbereich des distalen Abschnitts (7) vorgesehen ist.

8. Ladeeinheit (1) nach einem der vorhergehenden Ansprüche, umfassend eine Vielzahl von Lichtquellen (18), beispielsweise LEDs, zur Beleuchtung des Bereichs, aus dem der elektrische Stecker (2) entnommen werden kann, und/oder zur Darstellung des aktuellen Ladezustands der Batterien des Kraftfahrzeugs.

9. Ein elektrisch angetriebenes Kraftfahrzeug, umfassend eine Ladeeinheit (1) zum Laden einer oder mehrerer Batterien, die dauerhaft an Bord des genannten Kraftfahrzeugs (V) vorgesehen ist, wobei die genannte Ladeeinheit (1) umfasst:
- einen elektrischen Stecker (2), der von einem Ladekabel (3) getragen wird, vorgesehen zum Anschluss an eine externe elektrische Steckdose,
- einen hohlen Trag- und Aufnahmekörper (4), konfiguriert zur Aufnahme des genannten Ladekabels (3) und des genannten elektrischen Steckers (2),
wobei der genannte hohle Trag- und Aufnahmekörper (4) einen Hohlraum (5), einen proximalen Abschnitt (6) und einen distalen Abschnitt (7) definiert, wobei der genannte proximale Abschnitt (6) eine Öffnung (8) aufweist, aus der der genannte elektrische Stecker (2) manuell entnommen werden kann; und
- einen Aufnahmesitz (11), vorgesehen zur Aufnahme und Fixierung des elektrischen Steckers (2) in einer Ruheposition, wenn der Stecker (2) nicht verwendet werden muss, um einen Ladevorgang durchzuführen, wobei der genannte Aufnahmesitz (11) in der Nähe der Öffnung (8) angeordnet und im Wesentlichen so geformt ist, dass er die Form des elektrischen Steckers (2) negativ nachbildet,
**dadurch gekennzeichnet, dass** der genannte Aufnahmesitz (11) innerhalb eines Kopfabschnitts (13) des Körpers (4) angeordnet ist, der von einer Seitenwand des Kopfabschnitts (13) im Wesentlichen senkrecht zur Öffnung (8) vorsteht.

## Revendications

1. Unité de recharge (1) pour recharger une ou plusieurs batteries d'un véhicule automobile à propulsion électrique (V), prévue de manière permanente à bord dudit véhicule automobile (V), dans laquelle ladite unité de recharge (1) comprend:
- un connecteur électrique (2) porté par un câble de charge (3), prévu pour la connexion à une prise électrique externe;
- un corps de support et de confinement creux (4) configuré pour recevoir ledit câble de charge (3) et ledit connecteur électrique (2),
dans lequel ledit corps de support et de confinement creux (4) définit une cavité (5), une partie proximale (6), et une partie distale (7), dans laquelle ladite partie proximale (6) présente une ouverture (8) depuis laquelle il est possible de sortir manuellement ledit connecteur électrique (2); et
- un siège de réception (11) prévu pour recevoir et fixer le connecteur électrique (2) dans une position de repos lorsque le connecteur (2) ne doit pas être utilisé pour effectuer une opération de recharge, dans lequel ledit siège de réception (11) est disposé à proximité de l'ouverture (8) et est sensiblement façonné de manière à reproduire en négatif la forme du connecteur électrique (2),
dans lequel ledit siège de réception (11) est disposé à l'intérieur d'une partie tête (13) du corps (4), en saillie depuis une paroi latérale de la partie tête (13) sensiblement perpendiculairement à l'ouverture (8).

2. Unité de recharge (1) selon l'une quelconque des revendications précédentes, dans laquelle le corps de support et de confinement (4) définit un corps tubulaire sensiblement en forme de S.

3. Unité de recharge (1) selon l'une quelconque des revendications précédentes, dans laquelle le corps de support et de confinement (4) est constitué de deux demi-coquilles (4', 4") pouvant être accouplées ensemble par des moyens de fixation mutuels.

4. Unité de recharge (1) selon l'une quelconque des revendications précédentes, dans laquelle ledit corps de support et de confinement (4) comprend une couche de revêtement intérieure (15) appliquée sur la surface intérieure du corps (4) de manière à obtenir une couche d'isolation acoustique et de réduction de frottement, disposée entre le câble de charge (3) et le matériau dont est fait le corps (4).

5. Unité de recharge (1) selon l'une quelconque des revendications précédentes, dans laquelle le câble de charge (3) est un câble enroulé qui, dans une position de repos, adopte une configuration enroulée sensiblement coaxiale avec le corps de support et de confinement creux (4).

6. Unité de recharge (1) selon l'une quelconque des revendications précédentes, comprenant un autre connecteur électrique (9) supporté par ledit corps de support et de confinement creux (4) sur ladite partie distale (7), dans lequel ledit autre connecteur électrique (9) est connecté audit câble de charge (3) à une extrémité (10) opposée audit connecteur électrique (2) et est configuré pour recevoir un élément de connecteur correspondant pour la connexion à des composants électroniques respectifs de gestion des batteries du véhicule automobile (V).

7. Unité de recharge (1) selon l'une quelconque des revendications précédentes, dans laquelle le corps de support et de confinement (4) présente au moins une ouverture de drainage (17) prévue pour empêcher toute accumulation d'eau stagnante à l'intérieur du corps (4), dans laquelle ladite au moins une ouverture de drainage (17) est prévue dans une zone inférieure de la partie distale (7).

8. Unité de recharge (1) selon l'une quelconque des revendications précédentes, comprenant une pluralité de sources d'éclairage (18), par exemple des LED, pour éclairer la zone depuis laquelle le connecteur électrique (2) peut être sorti et/ou pour représenter l'état de charge actuel des batteries du véhicule automobile.

9. Véhicule automobile à propulsion électrique comprenant une unité de recharge (1) pour recharger une ou plusieurs batteries, qui est prévue de manière permanente à bord dudit véhicule automobile (V), dans laquelle ladite unité de recharge (1) comprend:
- un connecteur électrique (2) porté par un câble de charge (3), prévu pour la connexion à une prise électrique externe,
- un corps de support et de confinement creux (4) configuré pour loger ledit câble de charge (3) et ledit connecteur électrique (2),
dans lequel ledit corps de support et de confinement creux (4) définit une cavité (5), une partie proximale (6), et une partie distale (7), dans laquelle ladite partie proximale (6) présente une ouverture (8) depuis laquelle il est possible de sortir manuellement ledit connecteur électrique (2); et
- un siège de réception (11) prévu pour recevoir et fixer le connecteur électrique (2) dans une position de repos, lorsque le connecteur (2) ne doit pas être utilisé pour effectuer une opération de recharge, dans lequel ledit siège de réception (11) est disposé à proximité de l'ouverture (8) et est sensiblement façonné de manière à reproduire en négatif la forme du connecteur électrique (2),
**caractérisé en ce que** ledit siège de réception (11) est disposé à l'intérieur d'une partie tête (13) du corps (4), en saillie depuis une paroi latérale de la partie tête (13) sensiblement perpendiculairement à l'ouverture (8).
